(19) Europäisches Patentamt
European Patent Office
Office européen des brevets

(11) **EP 2 171 632 B1**

(12) **EUROPÄISCHE PATENTSCHRIFT**

(45) Veröffentlichungstag und Bekanntmachung des Hinweises auf die Patenterteilung:
**29.03.2017 Patentblatt 2017/13**

(21) Anmeldenummer: **08774915.6**

(22) Anmeldetag: **09.07.2008**

(51) Int Cl.:
**G06F 21/64** *(2013.01)*    **G06F 21/79** *(2013.01)*

(86) Internationale Anmeldenummer:
**PCT/EP2008/058909**

(87) Internationale Veröffentlichungsnummer:
**WO 2009/013132 (29.01.2009 Gazette 2009/05)**

(54) **VERFAHREN UND VORRICHTUNG ZUM ÜBERPRÜFEN DER INTEGRITÄT VON IN EINEM VORBESTIMMTEN SPEICHERBEREICH EINES SPEICHERS GESPEICHERTEN DATEN**

METHOD AND APPARATUS FOR CHECKING THE INTEGRITY OF DATA STORED IN A PREDETERMINED MEMORY AREA OF A MEMORY

PROCÉDÉ ET DISPOSITIF PERMETTANT DE VÉRIFIER L'INTÉGRITÉ DE DONNÉES MÉMORISÉES DANS UNE ZONE PRÉDÉFINIE D'UNE MÉMOIRE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.07.2007 DE 102007034525**

(43) Veröffentlichungstag der Anmeldung:
**07.04.2010 Patentblatt 2010/14**

(73) Patentinhaber: **Siemens Aktiengesellschaft 80333 München (DE)**

(72) Erfinder:
• **BUSSER, Jens-Uwe**
  **81739 München (DE)**
• **FRIES, Steffen**
  **85598 Baldham (DE)**

(56) Entgegenhaltungen:
**EP-A- 1 030 237      EP-A- 1 056 010
US-A1- 2005 283 623**

**Beschreibung**

Die Erfindung betrifft ein Verfahren und eine Vorrichtung zum Überprüfen der Integrität von in einem vorbestimmten Speicherbereich eines Speichers gespeicherten Daten.

Das technische Gebiet der Erfindung betrifft die Integritätsprüfung von gespeicherten Daten, insbesondere von Firmware oder Software. Solche Software oder Firmware ist dazu geeignet, Feldgeräte, Sensoren, Aktoren, DVD-Laufwerke, Festplatten oder dergleichen zu steuern. Diese können des Weiteren dazu geeignet sein, mittels eines Netzwerks miteinander oder mit anderen Geräten, wie Servern oder Personalcomputern, zu kommunizieren. Sind diese Geräte allerdings physikalisch ungeschützt, so haben Angreifer die Möglichkeit, auf die Software oder Firmware insbesondere zum Zwecke des Reverse Engineering zuzugreifen. Auch besteht die Gefahr, dass eine manipulierte Software oder Firmware zurück auf das entsprechende Gerät gebracht wird.

Eine Manipulationssicherheit der Software oder Firmware des entsprechenden Gerätes könnte durch Hardware-Maßnahmen, wie z.B. durch eine Versiegelung des Gerätes, erreicht werden. Nach der Versiegelung des Gerätes sind Manipulationen nicht mehr möglich. Allerdings wäre dann auch ein nachträgliches beabsichtigtes und gewünschtes, legales Firmware-Update nicht mehr möglich.

Eine weitere Schutzmöglichkeit kann durch eine Integritäts- und Authentizitätsprüfung der beim Firmware-Update eingespielten Firmware basierend auf digitalen Signaturen erreicht werden. Dies setzt aber voraus, dass beim Einspielvorgang eine Kontrolle durchgeführt werden kann und nicht der Speicherbaustein der Firmware einfach ersetzt wird.

Als weitere Möglichkeit der Manipulationssicherheit ist der Anmelderin intern bekannt, eine Software-Integritätskontrolle für ein Gerät mittels Berechnen einer Prüfsumme für die aktuell vorhandene Software und Vergleichen der berechneten Prüfsumme mit einer hinterlegten Prüfsumme durchzuführen. Dabei kann die Prüfsumme als kryptographische Prüfsumme ausgebildet sein und die hinterlegte Prüfsumme kann signiert hinterlegt sein. Dann können bei einer Kopplung des entsprechenden Gerätes mittels eines Netzwerks andere Netzknoten oder Einrichtungen über die vorhandenen Kommunikationskanäle diese Prüfsumme abfragen und mit dem gewünschten Wert vergleichen. Wird allerdings die Software des entsprechenden Gerätes durch ein manipuliertes Firmware-Update überschrieben, so ist auch diese Kontrollmöglichkeit außer Kraft gesetzt, da das manipulierte Gerät auch weiterhin Anfragen nach seiner Prüfsumme mit dem gewünschten Wert beantworten kann, sofern die entsprechende Prüfsumme in dem manipulierten Gerät gespeichert bleibt. Dann entspricht zwar die gespeicherte Prüfsumme nicht mehr der tatsächlichen Prüfsumme der aktuell vorhandenen Software in dem entsprechenden Gerät. Diese ist aber fest in dem manipulierten Gerät für ein Vortäuschen der Integrität der gespeicherten Software gespeichert.

Die US 6,954,861 B2 offenbart ein Verfahren zur Überprüfung der Authentizität eines ersten Kommunikationssystems (Client), welches Zugang zu einem zweiten Kommunikationssystem (Host) sucht. Hierzu wird der Speicherbereich, in dem auf dem ersten Kommunikationssystem (Client) eine bestimmte Software gespeichert ist, von dem zweiten Kommunikationssystem (Host) daraufhin untersucht, ob er sich einem registrierten Kommunikationssystem zuordnen lässt.

Die EP 1 030 237 A1 offenbart ein System für eine Rechenvorrichtung, bei welchem eine Überwachungskomponente Datenüberprüfungen in einer Rechenplattform durchführt.

Die EP 1 056 010 A1 zeigt das Erstellen eines Hash-Wertes für Daten, die in einem nicht-sicheren Speicherbereich gespeichert werden, wobei der Hash-Wert in einem gesicherten Speicherbereich gespeichert wird.

Demnach ist es eine Aufgabe der vorliegenden Erfindung, die Integrität von gespeicherten Daten, insbesondere von Firmware oder Software, einer ersten Einrichtung mittels einer mit der ersten Einrichtung gekoppelten zweiten Einrichtung zu überwachen. Erfindungsgemäß wird diese gestellte Aufgabe durch die unabhängigen Ansprüche gelöst.

Demgemäß wird ein Verfahren zum Überprüfen der Integrität von in einem vorbestimmten Speicherbereich eines Speichers einer ersten Einrichtung gespeicherten Daten vorgeschlagen, wobei die erste Einrichtung mit zumindest einer zweiten Einrichtung mittels eines Netzwerkes gekoppelt ist, welches die folgenden Schritte aufweist:

a) Bereitstellen zumindest eines Parameters, welcher dazu geeignet ist, einen Hash-Wert zumindest einer vorbestimmten Hash-Funktion beeinflussen;

b) Berechnen zumindest eines Hash-Wertes in Abhängigkeit der in dem vorbestimmten Speicher gespeicherten Daten, der zumindest einen vorbestimmten Hash-Funktion und des zumindest einen Parameters; und

c) Überprüfen der Integrität der in dem vorbestimmten Speicherbereich der ersten Einrichtung gespeicherten Daten in Abhängigkeit des berechneten Hash-Wertes oder der berechneten Hash-Werte durch die zweite Einrichtung,

wobei der zumindest eine Parameter eine Anzahl von Speicherstellenzeigern umfasst, wodurch zumindest zwei Speicherabschnitte des vorbestimmten Speicherbereiches definiert werden und die definierten Speicherabschnitte zumindest den vorbestimmten Speicherbereich abdecken, wobei jeweils ein Hash-Wert in Abhängigkeit der Daten eines der Speicherabschnitte und einer der vorbestimmten Hash-Funktionen berechnet wird.

Des Weiteren wird ein System zum Überprüfen der Integrität von in einem vorbestimmten Speicherbereichs einer ersten Einrichtung gespeicherten Daten vorgeschlagen, wobei die erste Einrichtung mit zumindest einer zweiten Einrichtung mittels eines Netzwerks gekoppelt ist, wobei das System aufweist:

- ein Mittel zur Bestimmung oder Bereitstellung zumindest eines Parameters, welcher dazu geeignet ist, einen Hash-Wert zumindest einer vorbestimmten Hash-Funktion zu beeinflussen;
- die erste Einrichtung, welche zumindest einen Hash-Wert in Abhängigkeit der in dem vorbestimmten Speicherbereich gespeicherten Daten, der zumindest einen vorbestimmten Hash-Funktion und des zumindest einen Parameters berechnet; und
- die zweite Einrichtung, welche die Integrität der in dem vorbestimmten Speicherbereich der ersten Einrichtung gespeicherten Daten in Abhängigkeit des berechneten Hash-Wertes oder der berechneten Hash-Werte überprüft, wobei der zumindest eine Parameter eine Anzahl von Speicherstellenzeigern umfasst, wodurch zumindest zwei Speicherabschnitte des vorbestimmten Speicherbereiches definiert werden und die definierten Speicherabschnitte zumindest den vorbestimmten Speicherbereich abdecken, wobei jeweils ein Hash-Wert in Abhängigkeit der Daten eines der Speicherabschnitte und einer der vorbestimmten Hash-Funktionen berechnet wird.

Ein Vorteil der vorliegenden Erfindung liegt darin, dass die geprüfte erste Einrichtung nur dann den korrekten Hash-Wert oder die korrekten Hash-Werte berechnen und erzeugen kann, wenn die erste Einrichtung auch tatsächlich über die gesamten auf Integrität zu prüfenden Daten verfügt. Insbesondere genügt es infolge der Verwendung des den jeweiligen Hash-Wert beeinflussenden Parameters nicht, den oder die Hash-Werte der Daten einmal zu berechnen und dann abzuspeichern, so dass die Daten gelöscht oder überschrieben werden könnten. Vorzugsweise ist der Speicher der ersten Einrichtung derart ausgestaltet, dass dieser neben dem vorbestimmten (ersten) Speicherbereich zur Speicherung der Daten einen zweiten Speicherbereich aufweist. Der erste Speicherbereich ist zur Speicherung der Daten, insbesondere der Software oder Firmware, der ersten Einrichtung geeignet. Der zweite Speicherbereich ist insbesondere zur Speicherung von Inhalten vorgesehen, die nicht geschützt werden müssen. Ist beispielsweise die erste Einrichtung als ein Sensor ausgebildet, so ist der zweite Speicherbereich für die Speicherung der jeweiligen Messdaten und/oder der Identifikationsnummer des Sensors vorgesehen.

Insbesondere ist der erste Speicherbereich größer oder sehr viel größer ausgestaltet als der zweite Speicherbereich.

Beispiele für verwendbare Hash-Funktionen sind MD5, SHA-1, SHA-2xx.

Vorteilhafte Ausgestaltungen und Weiterbildungen der Erfindung ergeben sich aus den Unteransprüchen sowie der Beschreibung unter Bezugnahme auf die Zeichnungen.

Gemäß einer bevorzugten Weiterbildung der Erfindung umfasst der Verfahrensschritt c):

c1) Übertragen des zumindest einen berechneten Hash-Wertes von der ersten Einrichtung an die zweite Einrichtung mittels des Netzwerkes;
c2) Berechnen zumindest eines Vergleichs-Hash-Wertes in Abhängigkeit einer Kopie der in dem vorbestimmten Speicherbereich gespeicherten Daten, welche in der zweiten Einrichtung gespeichert ist, der zumindest einen vorbestimmten Hash-Funktion und des zumindest einen vorbestimmten Parameters; und
c3) Vergleichen des übertragenen Hash-Wertes mit dem berechneten Vergleichs-Hash-Wert durch die zweite Einrichtung zur Bereitstellung eines Überprüfungsergebnisses.

Gemäß einer bevorzugten Ausgestaltung der Erfindung umfasst der zumindest eine Parameter eine Anzahl von Speicherstellenzeigern, wobei jeweils zwei Speicherstellenzeiger einen Speicherabschnitt des vorbestimmten Speicherbereiches definieren und die definierten Speicherabschnitte zumindest den vorbestimmten Speicherbereich abdecken, wobei jeweils ein Hash-Wert in Abhängigkeit der Daten eines der Speicherabschnitte und einer der vorbestimmten Hash-Funktionen berechnet wird.

Gemäß einer weiteren bevorzugten Ausgestaltung umfasst der zumindest eine Parameter zwei Speicherstellenzeiger, wobei ein erster Speicherstellenzeiger und ein Ende des vorbestimmten Speicherbereiches einen ersten Speicherabschnitt definieren, ein zweiter Speicherstellenzeiger und ein Beginn des vorbestimmten Speicherbereiches einen zweiten Speicherabschnitt definieren und die definierten Speicherabschnitte den vorbestimmten Speicherbereich zumindest abdecken, wobei jeweils ein Hash-Wert in Abhängigkeit der Daten eines der Speicherabschnitte und einer der vorbestimmten Hash-Funktionen berechnet wird.

Gemäß einer weiteren bevorzugten Ausgestaltung ist der zumindest eine Parameter als ein einziger Speicherzellenzeiger ausgebildet, welcher den vorbestimmten Speicherbereich in zwei Speicherabschnitte teilt, wobei jeweils ein Hash-Wert in Abhängigkeit der Daten eines der Speicherabschnitte und einer der vorbestimmten Hash-Funktionen berechnet wird.

Gemäß einer weiteren bevorzugten Ausgestaltung wird der jeweilige Vergleichs-Hash-Wert in Abhängigkeit einer Kopie der in dem jeweiligen Speicherabschnitt gespeicherten Daten und der jeweiligen vorbestimmten Hash-Funktion von der zweiten Einrichtung berechnet.

Gemäß einer weiteren bevorzugten Ausgestaltung ist der zumindest eine Parameter als Zufallszahl ausgebildet, mittels welcher die jeweilige Hash-Funktion initialisiert wird. Der jeweilige Hash-Wert wird in Abhängigkeit der in dem vorbestimmten Speicherbereich gespeicherten Daten und der jeweiligen initialisierten Hash-Funktion berechnet.

Gemäß einer weiteren bevorzugten Ausgestaltung wird der jeweilige Vergleichs-Hash-Wert in Abhängigkeit einer Kopie der in dem vorbestimmten Speicherbereich gespeicherten Daten und der jeweiligen vorbestimmten initialisierten Hash-Funktion von der zweiten Einrichtung berechnet.

Gemäß einer weiteren bevorzugten Ausgestaltung wird der zumindest eine Hash-Wert in Abhängigkeit der in dem vorbestimmten Speicherbereich gespeicherten Daten, der zumindest einen vorbestimmten Hash-Funktion, des zumindest einen Parameters und einer Identifikationsnummer der ersten Einrichtung berechnet. Entsprechendes gilt dann auch für den Vergleichs-Hash-Wert.

Gemäß einer weiteren bevorzugten Weiterbildung beinhaltet der Verfahrensschritt a) die folgenden Verfahrensteilschritte:

a1) Bereitstellen des zumindest einen Parameters, welcher dazu geeignet ist, einen Hash-Wert zumindest einer vorbestimmten Hash-Funktion zu beeinflussen, durch die zweite Einrichtung; und
a2) Übertragen des bereitgestellten Parameters von der zweiten Einrichtung an die erste Einrichtung.

Gemäß einer weiteren bevorzugten Ausgestaltung leitet die erste Einrichtung den zumindest einen Parameter aus dem berechneten Hash-Wert oder aus den berechneten Hash-Werten einer vorhergehenden Integritätsüberprüfung ab.

Gemäß einer weiteren bevorzugten Ausgestaltung wird bei einer jeden Überprüfung der in dem vorbestimmten Speicherbereich gespeicherten Daten jeweils ein neuer Parameter bereitgestellt.

Ferner wird ein Computerprogrammprodukt vorgeschlagen, welches auf einer programmgesteuerten Einrichtung die Durchführung eines wie oben erläuterten Verfahrens zur Integritätsüberprüfung veranlasst.

Denkbar ist zum Beispiel die Lieferung des Computerprogrammproduktes als Speichermedium, wie Speicherkarte, USB-Stick, Floppy, CD-ROM, DVD oder auch in Form einer herunterladbaren Datei von einem Server in einem Netzwerk. Dies kann zum Beispiel in einem drahtlosen Kommunikationsnetzwerk durch die Übertragung einer entsprechenden Datei mit dem Computerprogrammprodukt auf die erste und/oder zweite Einrichtung erfolgen.

Die Erfindung wird nachfolgend anhand der in den schematischen Figuren angegeben Ausführungsbeispielen näher erläutert. Es zeigen:

Figur 1    ein schematisches Blockschaltbild eines Ausführungsbeispiels des erfindungsgemäßen Systems;

Figur 2    ein schematisches Ablaufdiagramm eines ersten Ausführungsbeispiels des erfindungsgemäßen Verfahrens;

Figur 3    ein schematisches Ablaufdiagramm eines zweiten Ausführungsbeispiels des erfindungsgemäßen Verfahrens;

Figur 4    ein schematisches Ablaufdiagramm eines dritten Ausführungsbeispiels des erfindungsgemäßen Verfahrens;

Figur 5    ein schematisches Blockschaltbild des Speichers der ersten Einrichtung, auf welchem eine erste Ausgestaltung des Verfahrens nach Figur 2 angewendet wird;

Figur 6    ein schematisches Blockschaltbild des Speichers der ersten Einrichtung, auf welchem eine zweite Ausgestaltung des Verfahrens nach Figur 2 angewendet wird;

Figur 7    ein schematisches Blockschaltbild des Speichers der ersten Einrichtung, auf welchem eine dritte Ausgestaltung des Verfahrens nach Figur 2 angewendet wird;

Figur 8    ein schematisches Blockschaltbild des Speichers der ersten Einrichtung, auf welchem eine vierte Ausgestaltung des Verfahrens nach Figur 2 angewendet wird; und

Figur 9    ein schematisches Blockschaltbild des Speichers der ersten Einrichtung, auf welchem eine fünfte Ausgestaltung des Verfahrens nach Figur 2 angewendet wird.

In allen Figuren sind gleiche bzw. funktionsgleiche Elemente und Einrichtungen - sofern nichts anderes angegeben ist - mit denselben Bezugszeichen versehen.

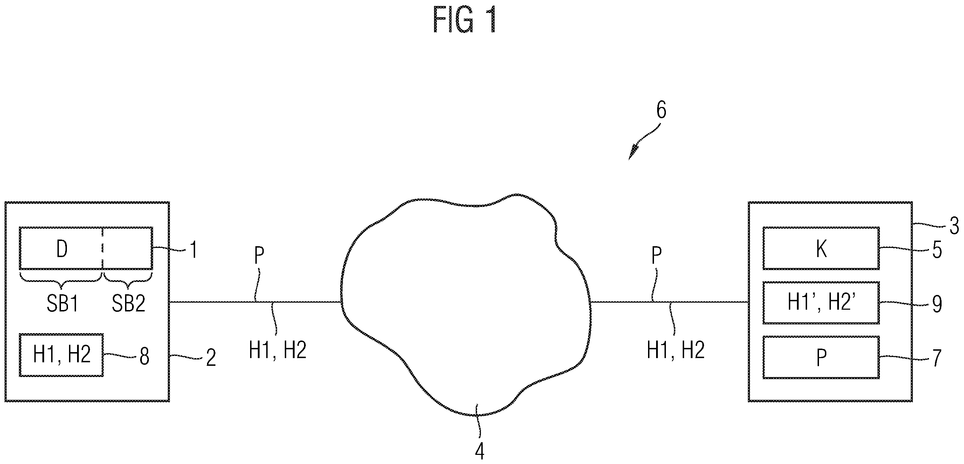

Figur 1 zeigt ein schematisches Blockschaltbild eines Ausführungsbeispiels des erfindungsgemäßen System 6 zum Überprüfen der Integrität von in einem vorbestimmten Speicherbereich SB1 eines Speichers 1 einer ersten Einrichtung 2 gespeicherten Daten D. Die erste Einrichtung 2 ist mit zumindest einer zweiten Einrichtung 3 mittels eines Netzwerks 4 gekoppelt.
Das System 6 weist ein erstes Mittel 7, die erste Einrichtung 2 und die zweite Einrichtung 3 auf. Gemäß dem Ausführungsbeispiel nach Figur 1 ist das erste Mittel 7 in der zweiten Einrichtung 3 angeordnet. Allerdings ist es auch denkbar, das erste Mittel 7 in der ersten Einrichtung 2 anzuordnen, deren Daten D auf Integrität überprüft werden sollen. Das erste Mittel 7 ist dazu geeignet, zumindest einen Parameter P zu bestimmen oder bereitzustellen, welcher dazu geeignet ist, einen Hash-Wert H1, H2 zumindest einer vorbestimmten Hash-Funktion zu beeinflussen.

Die erste Einrichtung 2 berechnet zumindest einen Hash-Wert H1, H2 in Abhängigkeit der in dem vorbestimmten Speicherbereich SB1 gespeicherten Daten D, der zumindest einen vorbestimmten Hash-Funktion und des zumindest einen Parameters P.

Wird beispielsweise nur ein Hash-Wert H1 über den gesamten vorbestimmten Speicherbereich SB1 berechnet, so ergibt sich der Hash-Wert H1 aus unten stehender Gleichung (1):

$$(1) \quad H1 = f_{hash}(P, D(SB1)),$$

wobei P den Parameter, $f_{hash}$ die verwendete Hash-Funktion und D(SB1) die Daten bezeichnet, welche in dem vorbestimmten Speicherbereich SB1 gespeichert sind.

Bezugzeichen 8 bezeichnet ein zweites Mittel, welches in der ersten Einrichtung 2 vorgesehen ist und die Berechnung der Hash-Werte H1, H2 durchführt.

Die zweite Einrichtung 3 ist dazu geeignet, die Integrität der in den vorbestimmten Speicherbereich SB1 der ersten Einrichtung gespeicherten Daten D in Abhängigkeit des berechneten Hash-Wertes H1 oder der berechneten Hash-Werte H1, H2 zu überprüfen. Dazu weist die zweite Einrichtung 3 ein drittes Mittel 9 auf, welches in Abhängigkeit einer Kopie K der in dem vorbestimmten Speicherbereich SB1 gespeicherten Daten D, welche in einem zweiten Speicher 5 der zweiten Einrichtung 3 gespeichert ist, der zumindest einen vorbestimmten Hash-Funktion $f_{hash}$ und des zumindest einen vorbestimmten Parameters P berechnet.

Für oben skizziertes Beispiel berechnet das dritte Mittel 9 den einzigen Vergleichs-Hash-Wert H1' mittels unten stehender Gleichung (2):

$$(2) \quad H1' = f_{hash}(P, K)$$

Vorzugsweise wird bei einer jeden neuen Überprüfung der in dem vorbestimmten Speicherbereich SB1 des Speichers 1 der ersten Einrichtung 2 gespeicherten Daten D jeweils ein neuer Parameter P von dem ersten Mittel 7 bereitgestellt.

Insbesondere ist der erste Speicherbereich SB1 des Speichers 1 größer oder deutlich größer als der zweite Speicherbereich SB2 des Speichers 1, welcher nicht auf Integrität zu überprüfen Inhalte speichert.

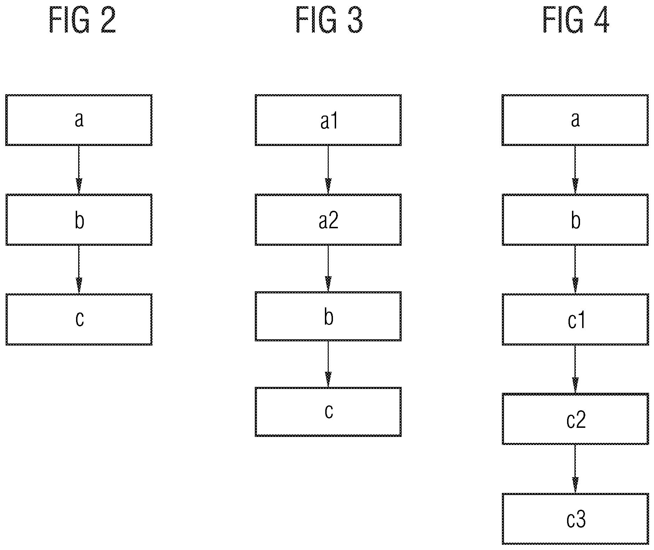

Figur 2 zeigt ein erstes Ausführungsbeispiel des erfindungsgemäßen Verfahrens zum Überprüfen der Integrität von in dem vorbestimmten Speicherbereich SB1 des Speichers 1 der ersten Einrichtung 2 gespeicherten Daten D. Nachfolgend wird das erste Ausführungsbeispiel des erfindungsgemäßen Verfahrens anhand des Blockschaltbildes in Figur 2 mit Bezug auf Figur 1 erläutert. Das erste Ausführungsbeispiel des erfindungsgemäßen Verfahrens gemäß Figur 2 weist folgende Verfahrensschritte a) bis c) auf:

Verfahrensschritt a):

Es wird zumindest ein Parameter P bereitgestellt, welcher dazu geeignet ist, einen Hash-Wert H1, H2 zumindest einer vorbestimmten Hash-Funktion zu beeinflussen.

Vorzugsweise wird bei einer jeden neuen Überprüfung der in dem vorbestimmten Speicherbereich SB1 gespeicherten Daten D jeweils ein neuer Parameter P bereitgestellt.

Verfahrensschritt b):

Der zumindest eine Hash-Wert H1, H2 wird in Abhängigkeit der in dem vorbestimmten Speicherbereich SB1 gespeicherten Daten D, der zumindest einen Hash-Funktion und des zumindest einen Parameters P berechnet.

Verfahrensschritt c):

Die Integrität der in dem vorbestimmten Speicherbereich SB1 der ersten Einrichtung 2 gespeicherten Daten D wird in Abhängigkeit des berechneten Hash-Wertes H1 oder der berechneten Hash-Werte H1, H2 durch die zweite Einrichtung 3 überprüft.

Insbesondere kann bei regelmäßig erfolgenden Überprüfungen der Integrität der Parameter P oder die Parameter P von dem Hash-Wert H1 oder den Hash-Werten H1, H2 der vorherigen Überprüfung abgeleitet werden. Beispielsweise könnte P als die 32 am wenigsten signifikanten Bits des Hash-Wertes H1 der vorhergehenden Prüfung abgeleitet werden.

Damit kann die zu überprüfende erste Einrichtung 2 die Integrität ihrer Daten D bzw. Software oder Firmware unter Beweis stellen ohne die Notwendigkeit, jedes Mal vor der Überprüfung den entsprechenden Parameter P oder die entsprechenden Parameter P von der zweiten Einrichtung 3 erhalten zu müssen. Folglich kann eine Anforderungsnachricht von der überprüfenden zweiten Einrichtung 3 an die zu prüfende erste Einrichtung 2 entfallen. Dies ist insbesondere dann von großem Vorteil, wenn die zweite Einrichtung 3 als ein überprüfender Server ausgebildet ist, der eine Vielzahl von ersten Einrichtungen 2 oder Netzknoten zu überprüfen hat.

Diese Variante ist insbesondere dann vorteilhaft, wenn sichergestellt ist, dass keine Nachrichten zwischen der ersten Einrichtung 2 und der zweiten Einrichtung 3 verloren gehen. Kann dies aber nicht sichergestellt werden, so muss zusätzlich ein Synchronisationsmechanismus für die Überprüfung implementiert werden.

Figur 3 zeigt ein zweites Ausführungsbeispiel des erfindungsgemäßen Verfahrens. Das zweite Ausführungsbeispiel gemäß Figur 3 unterscheidet sich von dem ersten Ausführungsbeispiel gemäß Figur 2 dahingehend, dass die Verfahrensschritte a1) und a2) gemäß Figur 3 den Verfahrensschritt a) gemäß Figur 2 ersetzen. Demgegenüber entsprechen die Verfahrensschritte b) und c) einander und werden aus diesem Grund nicht erläutert. Das zweite Ausführungsbeispiel des erfindungsgemäßen Verfahrens gemäß Figur 3 weist demnach die unten beschriebenen Verfahrensschritte a1) und a2) und die mit Bezug zu Figur 2 beschriebenen Verfahrensschritte b) und c) auf:

Verfahrensschritt a1):

Der zumindest eine Parameter P, welcher dazu geeignet ist, einen Hash-Wert H1, H2 zumindest einer vorbestimmten Hash-Funktion zu beeinflussen, wird durch die zweite Einrichtung 3 bereitgestellt.

Verfahrensschritt a2):

Der bereitgestellte Parameter P wird von der zweiten Einrichtung 3 an die erste Einrichtung 2 mittels des Netzwerks 4 übertragen.

Figur 4 zeigt ein drittes Ausführungsbeispiel des erfindungsgemäßen Verfahrens. Das dritte Ausführungsbeispiel des erfindungsgemäßen Verfahrens gemäß Figur 4 unterscheidet sich von dem ersten Ausführungsbeispiel des erfindungsgemäßen Verfahrens gemäß Figur 2 dahingehend, dass die Verfahrensschritte c1) bis c3) gemäß Figur 4 den Verfahrensschritt c) gemäß Figur 2 ersetzen. Die Verfahrensschritte a) und b) gemäß Figur 4 entsprechen den Verfahrensschritten a) und b) gemäß Figur 2. Demnach weist das dritte Ausführungsbeispiel des erfindungsgemäßen Verfahrens gemäß Figur 4 die zu Figur 2 beschriebenen Verfahrensschritte a) und b) sowie die nachstehend erläuterten Verfahrensschritte c1) bis c3) auf:

Verfahrensschritt c1):

Der zumindest eine berechnete Hash-Wert H1, H2 wird von der ersten Einrichtung 2 an die zweite Einrichtung 3 mittels des Netzwerks 4 übertragen.

Verfahrensschritt c2):

Zumindest ein Vergleichs-Hash-Wert H1', H2' wird in Abhängigkeit einer Kopie K der in dem vorbestimmten Speicherbereich SB1 gespeicherten Daten D, welche in der zweiten Einrichtung 3 gespeichert ist, der zumindest einen vorbestimmten Hash-Funktion und des zumindest einen vorbestimmten Parameter P berechnet. Berechnet beispielsweise die erste Einrichtung 2 zwei Hash-Werte H1 und H2 gemäß unten stehender Gleichungen (3) und (4), so berechnet die zweite Einrichtung 3 die jeweiligen Vergleichs-Hash-Werte H1' bzw. H2' mittels unten stehender Gleichungen (5) und (6):

$$(3) \quad H1 = f_{hash}(P, D(SB1))$$

$$(4) \quad H2 = f'_{hash}(P, D(SB1))$$

$$(5) \quad H1' = f_{hash}(P, K)$$

$$(6) \quad H2' = f'_{hash}(P, K)$$

Insbesondere sind die beiden Hash-Funktionen $f_{hash}$ und $f'_{hash}$ unterschiedlich ausgebildet. Sie können aber auch identisch sein.

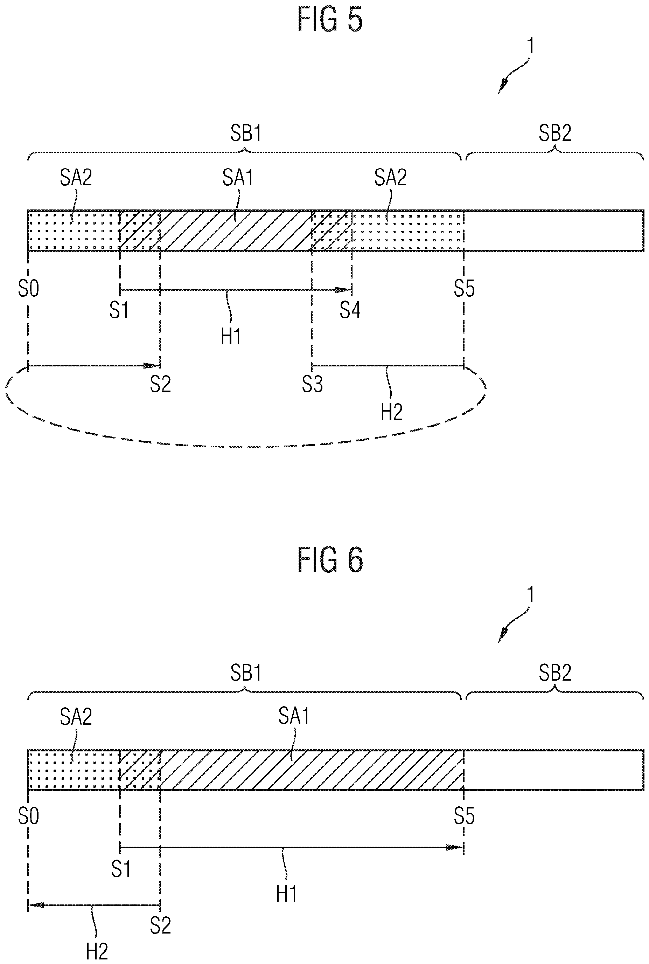

Die Figuren 5 bis 9 zeigen Ausgestaltungen der drei Ausführungsbeispiele des erfindungsgemäßen Verfahrens gemäß der Figuren 2 bis 4, insbesondere des Verfahrens gemäß Figur 2.

Gemäß Figur 5 umfasst der zumindest eine Parameter P vier Speicherstellenzeiger S1-S4.

Die Speicherstellenzeiger S1 und S4 definieren einen ersten Speicherabschnitt SA1 des vorbestimmten Speicherbereichs SB1. Ferner definieren die Speicherstellenzeiger S2 und S3 einen zweiten Speicherabschnitt SA2 des vorbestimmten Speicherbereichs SB1. Die beiden Speicherabschnitte SA1 und SA2 decken den vorbestimmten Speicherbereich SB1 zumindest ab. Gemäß dem Ausführungsbeispiel nach Figur 5 bilden sie auch einen Überlapp zwischen den Speicherstellenzeigern S1 und S2 sowie zwischen S3 und S4.

Der erste Hash-Wert H1 wird in Abhängigkeit der Daten D(SA1) des ersten Speicherabschnitt SA1 und einer der vorbestimmten Hash-Funktion $f_{hash}$ berechnet (siehe Gleichung 7):

$$(7) \quad H1 = f_{hash}(D(SA1))$$

Der zweite Hash-Wert H2 wird in Abhängigkeit der Daten D(SA2) des zweiten Speicherabschnitts SA2 und einer der vorbestimmten Hash-Funktionen $f'_{hash}$ berechnet (Siehe Gleichung 8):

$$(8) \quad H2 = f'_{hash}(D(SA2))$$

Die Hash-Funktionen $f_{hash}$ und $f'_{hash}$ können unterschiedlich ausgebildet sein, sie können aber auch identisch sein.

Insbesondere werden die Speicherstellenzeiger S1 bis S4 von der zu prüfenden zweiten Einrichtung 3 der ersten Einrichtung 2 bereitgestellt, sodass die geprüfte Einrichtung 2 keine Möglichkeit hat, die Hash-Werte H1 und H2 der Hash-Funktionen $f_{hash}$, $f'_{hash}$ teilweise oder ganz vorzuberechnen und somit Teile der Daten D bzw. der Software von der Prüfung auszunehmen.

Gemäß Figur 6 umfasst der zumindest eine Parameter P zwei Speicherstellenzeiger S1, S2. Der erste Speicherstellenzeiger S1 und ein Ende S5 des vorbestimmten Speicherbereichs SB1 definieren den ersten Speicherabschnitt SA1. Der zweite Speicherstellenzeiger S2 und der Beginn S0 des vorbestimmten Speicherbereichs SB1 definieren den zweiten Speicherabschnitt SA2. Auch die beiden Speicherabschnitte SA1 und SA2 gemäß Figur 6 decken den vorbestimmten Speicherbereich SB1 - wie nach Figur 5 - nicht nur gänzlich ab, sondern bilden einen Überlapp, gemäß Figur 6 zwischen S1 und S2. Die Berechnung der Hash-Werte H1, H2 ergibt sich analog aus den obigen Gleichungen (7) und (8).

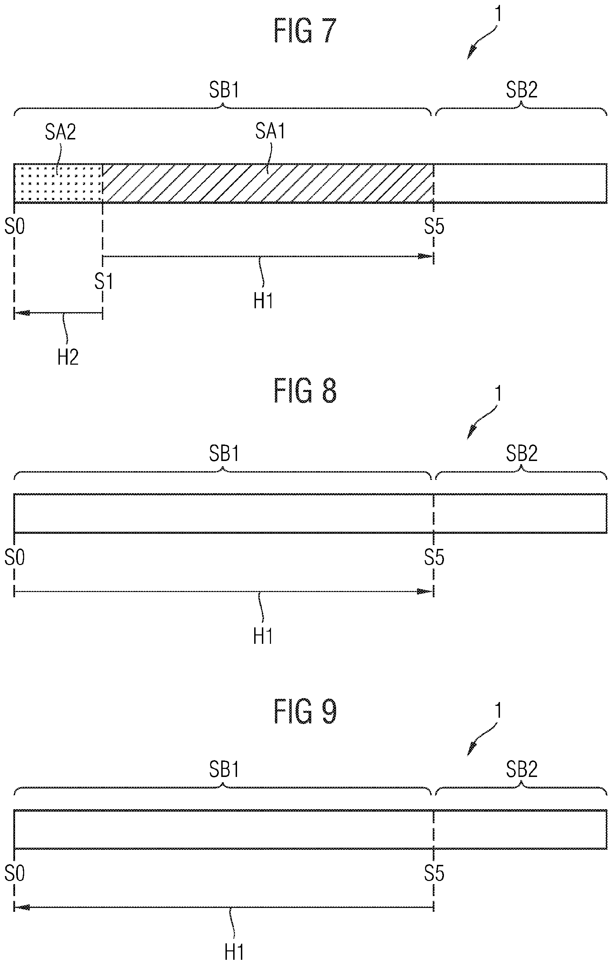

Gemäß Figur 7 ist der zumindest eine Parameter P als ein einziger Speicherstellenzeiger S1 ausgebildet, welcher den vorbestimmten Speicherbereich SB1 in die zwei Speicherabschnitte SA1, SA2 teilt. Die Berechnung der Hash-Werte H1, H2 ergibt sich analog aus den obigen Gleichungen (7) und (8).

Selbstverständlich kann der vorbestimmte Speicherbereich SB1 gemäß der Figuren 5 bis 7 nicht nur in zwei Speicherabschnitte SA1, SA2 sondern in eine beliebige Anzahl von Speicherabschnitten unterteilt werden, wobei dann entweder für jeden Speicherabschnitt ein eigener Hash-Wert berechnet wird oder für mehrere Speicherabschnitte, die in beliebiger, aber fest definierter Reihenfolge kombiniert werden, ein gemeinsamer Hash-Wert berechnet wird.

Gemäß der Figuren 8 und 9 ist der zumindest eine Parameter P als zumindest eine Zufallszahl R ausgebildet, mittels welche die jeweilige Hash-Funktion initialisiert wird. Der jeweilige Hash-Wert H1 wird dann in Abhängigkeit der in dem vorbestimmten Speicherbereich SB1 gespeicherten Daten D(SB1) und der jeweiligen initialisierten Hash-Funktion $f_{hash}$ berechnet. Beispielsweise berechnet sich der Hash-Wert H1 dann aus unten stehender Gleichung (9):

$$(9) \quad H1 = f_{hash}(R, D)$$

$$(10) \quad H1' = f_{hash}(R, K)$$

Folglich wird der jeweilige Vergleichs-Hash-Wert H1' in Abhängigkeit einer Kopie K der in dem vorbestimmten Speicherbereich SB1 gespeicherten Daten D und der jeweiligen vorbestimmten initialisierten Hash-Funktion von der zweiten Einrichtung 3 berechnet (siehe Gleichung (10)). Die beiden Ausgestaltungen gemäß der Figuren 8 und 9 unterscheiden sich dahingehend, dass die Berechnung des Hash-Wertes H1 einmal vom Beginn S0 des vorbestimmten Speicherbereichs SB1 zu dessen Ende S5 erfolgt (vergleiche Figur 8) und einmal in umgekehrter Richtung von S5 nach S0 (vergleiche Figur 9).

Obwohl die vorliegende Erfindung vorstehend anhand der bevorzugten Ausführungsbeispiele beschrieben wurde, ist es darauf nicht beschränkt, sondern auf vielfältige Art und Weise modifizierbar. Beispielsweise ist es denkbar, den zumindest einen Parameter P derart auszugestalten, dass er sowohl Speicherstellenzeiger wie auch zumindest eine Zufallszahl beinhaltet.

**Patentansprüche**

1. Verfahren zum Überprüfen der Integrität von in einem vorbestimmten Speicherbereich (SB1) eines Speichers (1) einer ersten Einrichtung (2) gespeicherten Daten (D), wobei die erste Einrichtung (2) mit zumindest einer zweiten Einrichtung (3) mittels eines Netzwerkes (4) gekoppelt ist, mit den Schritten:

    a) Bereitstellen zumindest eines Parameters (P), welcher dazu geeignet ist, einen Hash-Wert (H1, H2) zumindest einer vorbestimmten Hash-Funktion beeinflussen;
    b) Berechnen zumindest eines Hash-Wertes (H1, H2) in Abhängigkeit der in dem vorbestimmten Speicherbereich (SB1) gespeicherten Daten (D), der zumindest einen vorbestimmten Hash-Funktion und des zumindest einen Parameters (P); und
    c) Überprüfen der Integrität der in dem vorbestimmten Speicherbereich (SB1) der ersten Einrichtung (2) gespeicherten Daten (D) in Abhängigkeit des berechneten Hash-Wertes (H1) oder der berechneten Hash-Werte (H1, H2) durch die zweite Einrichtung (3),

    wobei der zumindest eine Parameter (P) eine Anzahl von Speicherstellenzeigern (S1-S4) umfasst, wodurch zumindest zwei Speicherabschnitte (SA1, SA2) des vorbestimmten Speicherbereiches (SB1) definiert werden und die definierten Speicherabschnitte (SA1, SA2) zumindest den vorbestimmten Speicherbereich (SB1) abdecken, wobei jeweils ein Hash-Wert (H1, H2) in Abhängigkeit der Daten eines der Speicherabschnitte (SA1, SA2) und einer der vorbestimmten Hash-Funktionen berechnet wird.

2. Verfahren nach Anspruch 1,
**dadurch gekennzeichnet,**
**dass** der Verfahrensschritt c) beinhaltet:

    c1) Übertragen des zumindest einen berechneten Hash-Wertes (H1, H2) von der ersten Einrichtung (2) an die zweite Einrichtung (3) mittels des Netzwerkes (4);

c2) Berechnen zumindest eines Vergleichs-Hash-Wertes (H1', H2') in Abhängigkeit einer Kopie (K) der in dem vorbestimmten Speicherbereich (SB1) gespeicherten Daten (D), welche in der zweiten Einrichtung (3) gespeichert ist, der zumindest einen vorbestimmten Hash-Funktion und des zumindest einen vorbestimmten Parameters (P); und

c3) Vergleichen des übertragenen Hash-Wertes (H1, H2) mit dem berechneten Vergleichs-Hash-Wert (H1', H2') durch die zweite Einrichtung (3) zur Bereitstellung eines Überprüfungsergebnisses.

**3.** Verfahren nach Anspruch 1 und 2,
**dadurch gekennzeichnet,**
**dass** der zumindest eine Parameter (P) eine Anzahl von Speicherstellenzeigern (S1-S4) umfasst, wobei jeweils zwei Speicherstellenzeiger (S1, S4; S3, S2) einen Speicherabschnitt (SA1, SA2) des vorbestimmten Speicherbereiches (SB1) definieren und die definierten Speicherabschnitte (SA1, SA2) zumindest den vorbestimmten Speicherbereich (SB1) abdecken, wobei jeweils ein Hash-Wert (H1, H2) in Abhängigkeit der Daten eines der Speicherabschnitte (SA1, SA2) und einer der vorbestimmten Hash-Funktionen berechnet wird.

**4.** Verfahren nach Anspruch 1 oder 2,
**dadurch gekennzeichnet,**
**dass** der zumindest eine Parameter (P) zwei Speicherstellenzeiger (S1, S2) umfasst, wobei ein erster Speicherstellenzeiger (S1) und ein Ende (S5) des vorbestimmten Speicherbereiches (SB1) einen ersten Speicherabschnitt (SA1) definieren, ein zweiter Speicherstellenzeiger (S2) und ein Beginn (S0) des vorbestimmten Speicherbereiches (SB1) einen zweiten Speicherabschnitt (SA2) definieren und die definierten Speicherabschnitte (SA1, SA2) den vorbestimmten Speicherbereich (SB1) zumindest abdecken, wobei jeweils ein Hash-Wert (H1, H2) in Abhängigkeit der Daten eines der Speicherabschnitte (SA1, SA2) und einer der vorbestimmten Hash-Funktionen berechnet wird.

**5.** Verfahren nach Anspruch 3 oder 4,
**dadurch gekennzeichnet,**
**dass** der jeweilige Vergleichs-Hash-Wert (H1', H2') in Abhängigkeit einer Kopie (K) der in dem jeweiligen Speicherabschnitt (SA1, SA2) gespeicherten Daten und der jeweiligen vorbestimmten Hash-Funktion von der zweiten Einrichtung (3) berechnet wird.

**6.** Verfahren nach Anspruch 1 oder einem der Ansprüche 2 bis 5,
**dadurch gekennzeichnet,**

**dass** der zumindest eine Hash-Wert (H1, H2) in Abhängigkeit der in dem vorbestimmten Speicherbereich (SB1) gespeicherten Daten (D), der zumindest einen vorbestimmten Hash-Funktion, des zumindest einen Parameters (P) und einer Identifikationsnummer der ersten Einrichtung (2) berechnet wird.

**7.** Verfahren nach Anspruch 1 oder einem der Ansprüche 2 bis 6,
**dadurch gekennzeichnet,**
**dass** der Verfahrensschritt a) beinhaltet:

a1) Bereitstellen des zumindest einen Parameters (P), welcher dazu geeignet ist, einen Hash-Wert (H1, H2) zumindest einer vorbestimmten Hash-Funktion zu beeinflussen, durch die zweite Einrichtung (3); und
a2) Übertragen des bereitgestellten Parameters (P) von der zweiten Einrichtung (3) an die erste Einrichtung (2).

**8.** Verfahren nach Anspruch 1 oder einem der Ansprüche 2 bis 7,
**dadurch gekennzeichnet,**
**dass** die erste Einrichtung (2) den zumindest einen Parameter (P) aus dem berechneten Hash-Wert (H1) oder aus den berechneten Hash-Werten (H1, H2) einer vorhergehenden IntegritätsÜberprüfung ableitet.

**9.** Verfahren nach Anspruch 1 oder einem der Ansprüche 2 bis 8,
**dadurch gekennzeichnet,**
**dass** bei einer jeden Überprüfung der in dem vorbestimmten Speicherbereich (SB1) gespeicherten Daten (D) jeweils ein neuer Parameter (P) bereitgestellt wird.

**10.** Computerprogrammprodukt,
welches auf einer programmgesteuerten Einrichtung die Durchführung eines Verfahrens nach einem der Ansprüche 1 bis 9 veranlasst.

**11.** System (6) zum Überprüfen der Integrität von in einem vorbestimmten Speicherbereich (SB1) eines Speichers (1) einer ersten Einrichtung (2) gespeicherten Daten (D), wobei die erste Einrichtung (2) mit zumindest einer zweiten Einrichtung (3) mittels eines Netzwerkes (4) gekoppelt ist, mit:

- einem Mittel (7) zur Bereitstellung zumindest eines Parameters (P), welcher dazu geeignet ist, einen Hash-Wert (H1, H2) zumindest einer vorbestimmten Hash-Funktion zu beeinflussen;
- der ersten Einrichtung (2), welche zumindest einen Hash-Wert (H1, H2) in Abhängigkeit der in dem vorbestimmten Speicherbereich (SB1) gespeicherten Daten (D), der zumindest einen vorbestimmten Hash-Funktion und des zumindest einen Parameters (P) berechnet; und
- der zweiten Einrichtung (3), welche die Integrität der in dem vorbestimmten Speicherbereich (SB1) der ersten Einrichtung (2) gespeicherten Daten (D) in Abhängigkeit des berechneten Hash-Wertes (H1) oder der berechneten Hash-Werte (H1, H2) überprüft,

wobei der zumindest eine Parameter (P) eine Anzahl von Speicherstellenzeigern (S1-S4) umfasst, wodurch zumindest zwei Speicherabschnitte (SA1, SA2) des vorbestimmten Speicherbereiches (SB1) definiert werden und die definierten Speicherabschnitte (SA1, SA2) zumindest den vorbestimmten Speicherbereich (SB1) abdecken, wobei jeweils ein Hash-Wert (H1, H2) in Abhängigkeit der Daten eines der Speicherabschnitte (SA1, SA2) und einer der vorbestimmten Hash-Funktionen berechnet wird.

12. Verfahren zum Überprüfen der Integrität von in einem vorbestimmten Speicherbereich (SB1) eines Speichers (1) einer ersten Einrichtung (2) gespeicherten Daten (D), wobei die erste Einrichtung (2) mit zumindest einer zweiten Einrichtung (3) mittels eines Netzwerkes (4) gekoppelt ist, mit den Schritten:

a) Bereitstellen zumindest eines Parameters (P), welcher dazu geeignet ist, einen Hash-Wert (H1, H2) zumindest einer vorbestimmten Hash-Funktion beeinflussen;
b) Berechnen zumindest eines Hash-Wertes (H1, H2) in Abhängigkeit der in dem vorbestimmten Speicherbereich (SB1) gespeicherten Daten (D), der zumindest einen vorbestimmten Hash-Funktion und des zumindest einen Parameters (P); und
c) Überprüfen der Integrität der in dem vorbestimmten Speicherbereich (SB1) der ersten Einrichtung (2) gespeicherten Daten (D) in Abhängigkeit des berechneten Hash-Wertes (H1) oder der berechneten Hash-Werte (H1, H2) durch die zweite Einrichtung (3),

wobei der zumindest eine Parameter (P) als zumindest eine Zufallszahl (R) ausgebildet ist, mittels welcher die jeweilige Hash-Funktion initialisiert wird, wobei der jeweilige Hash-Wert (H1) in Abhängigkeit der in dem vorbestimmten Speicherbereich (SB1) gespeicherten Daten (D) und der jeweiligen initialisierten Hash-Funktion berechnet wird.

13. Verfahren nach Anspruch 12,
**dadurch gekennzeichnet,**
**dass** der Verfahrensschritt c) beinhaltet:

c1) Übertragen des zumindest einen berechneten Hash-Wertes (H1, H2) von der ersten Einrichtung (2) an die zweite Einrichtung (3) mittels des Netzwerkes (4);
c2) Berechnen zumindest eines Vergleichs-Hash-Wertes (H1', H2') in Abhängigkeit einer Kopie (K) der in dem vorbestimmten Speicherbereich (SB1) gespeicherten Daten (D), welche in der zweiten Einrichtung (3) gespeichert ist, der zumindest einen vorbestimmten Hash-Funktion und des zumindest einen vorbestimmten Parameters (P); und
c3) Vergleichen des übertragenen Hash-Wertes (H1, H2) mit dem berechneten Vergleichs-Hash-Wert (H1', H2') durch die zweite Einrichtung (3) zur Bereitstellung eines Überprüfungsergebnisses.

14. Verfahren nach Anspruch 12,
**dadurch gekennzeichnet,**
**dass** der jeweilige Vergleichs-Hash-Wert (H1') in Abhängigkeit einer Kopie (K) der in dem vorbestimmten Speicherbereich (SB1) gespeicherten Daten (D) und der jeweiligen vorbestimmten initialisierten Hash-Funktion von der zweiten Einrichtung (3) berechnet wird.

15. Verfahren nach Anspruch 12, 13 oder 14,
**dadurch gekennzeichnet,**
**dass** der zumindest eine Hash-Wert (H1, H2) in Abhängigkeit der in dem vorbestimmten Speicherbereich (SB1) gespeicherten Daten (D), der zumindest einen vorbestimmten Hash-Funktion, des zumindest einen Parameters (P) und einer Identifikationsnummer der ersten Einrichtung (2) berechnet wird.

16. Verfahren nach Anspruch 12 oder einem der Ansprüche 13 bis 15,
**dadurch gekennzeichnet,**
**dass** der Verfahrensschritt a) beinhaltet:

a1) Bereitstellen des zumindest einen Parameters (P), welcher dazu geeignet ist, einen Hash-Wert (H1, H2) zumindest einer vorbestimmten Hash-Funktion zu beeinflussen, durch die zweite Einrichtung (3); und
a2) Übertragen des bereitgestellten Parameters (P) von der zweiten Einrichtung (3) an die erste Einrichtung (2).

17. Verfahren nach Anspruch 12 oder einem der Ansprüche 13 bis 16,
**dadurch gekennzeichnet,**
**dass** die erste Einrichtung (2) den zumindest einen Parameter (P) aus dem berechneten Hash-Wert (H1) oder aus den berechneten Hash-Werten (H1, H2) einer vorhergehenden IntegritätsÜberprüfung ableitet.

**18.** Verfahren nach Anspruch 12 oder einem der Ansprüche 13 bis 17,
**dadurch gekennzeichnet,**
**dass** bei einer jeden Überprüfung der in dem vorbestimmten Speicherbereich (SB1) gespeicherten Daten (D) jeweils ein neuer Parameter (P) bereitgestellt wird.

**19.** Computerprogrammprodukt,
welches auf einer programmgesteuerten Einrichtung die Durchführung eines Verfahrens nach einem der Ansprüche 12 bis 18 veranlasst.

**20.** System (6) zum Überprüfen der Integrität von in einem vorbestimmten Speicherbereich (SB1) eines Speichers (1) einer ersten Einrichtung (2) gespeicherten Daten (D), wobei die erste Einrichtung (2) mit zumindest einer zweiten Einrichtung (3) mittels eines Netzwerkes (4) gekoppelt ist, mit:

- einem Mittel (7) zur Bereitstellung zumindest eines Parameters (P), welcher dazu geeignet ist, einen Hash-Wert (H1, H2) zumindest einer vorbestimmten Hash-Funktion zu beeinflussen;
- der ersten Einrichtung (2), welche zumindest einen Hash-Wert (H1, H2) in Abhängigkeit der in dem vorbestimmten Speicherbereich (SB1) gespeicherten Daten (D), der zumindest einen vorbestimmten Hash-Funktion und des zumindest einen Parameters (P) berechnet; und
- der zweiten Einrichtung (3), welche die Integrität der in dem vorbestimmten Speicherbereich (SB1) der ersten Einrichtung (2) gespeicherten Daten (D) in Abhängigkeit des berechneten Hash-Wertes (H1) oder der berechneten Hash-Werte (H1, H2) überprüft,

wobei der zumindest eine Parameter (P) als zumindest eine Zufallszahl (R) ausgebildet ist, mittels welcher die jeweilige Hash-Funktion initialisiert wird, wobei der jeweilige Hash-Wert (H1) in Abhängigkeit der in dem vorbestimmten Speicherbereich (SB1) gespeicherten Daten (D) und der jeweiligen initialisierten Hash-Funktion berechnet wird.

**Claims**

**1.** Method for checking the integrity of data (D) stored in a predetermined memory area (SB1) of a memory (1) of a first device (2), wherein the first device (2) is coupled to at least one second device (3) by means of a network (4), comprising the steps:

a) provision of at least one parameter (P) which is suitable for influencing a hash value (H1, H2) of at least one predetermined hash function;
b) calculation of at least one hash value (H1, H2) on the basis of the data (D) stored in the predetermined memory area (SB1), the at least one predetermined hash function and the at least one parameter (P); and
c) checking of the integrity of the data (D) stored in the predetermined memory area (SB1) of the first device (2) on the basis of the calculated hash value (H1) or the calculated hash values (H1, H2) by the second device (3),

wherein the at least one parameter (P) comprises a number of memory location pointers (S1-S4), as a result of which at least two memory sections (SA1, SA2) of the predetermined memory area (SB1) are defined and the defined memory sections (SA1, SA2) cover at least the predetermined memory area (SB1), wherein in each case a hash value (H1, H2) is calculated on the basis of the data of one of the memory sections (SA1, SA2) and one of the predetermined hash functions.

**2.** Method according to claim 1,
**characterised in that**
the method step c) comprises:

c1) transfer of the at least one calculated hash value (H1, H2) from the first device (2) to the second device (3) by means of the network (4);
c2) calculation of at least one comparison hash value (H1', H2') on the basis of a copy (K) of the data (D) stored in the predetermined memory area (SB1), which is stored in the second device (3), the at least one predetermined hash function and the at least one predetermined parameter (P); and
c3) comparison by the second device (3) of the transferred hash value (H1, H2) with the calculated comparison hash value (H1', H2') in order to provide a checking result.

**3.** Method according to claim 1 and 2,
**characterised in that**
the at least one parameter (P) comprises a number of memory location pointers (S1-S4), wherein each two memory location pointers (S1, S4; S3, S2) define a memory section (SA1, SA2) of the predetermined memory area (SB1) and the defined memory sections (SA1, SA2) cover at least the predetermined memory area (SB1), wherein in each case a hash value (H1, H2) is calculated on the basis of the data of one of the memory sections (SA1, SA2) and one of the predetermined hash functions.

**4.** Method according to claim 1 or 2,
**characterised in that**
the at least one parameter (P) comprises two memory location pointers (S1, S2), wherein a first memory location pointer (S1) and an end (S5) of the predetermined memory area (SB1) define a first memory section (SA1), a second memory location pointer (S2) and a beginning (S0) of the predetermined memory area (SB1) define a second memory section (SA2) and the defined memory sections (SA1, SA2) at least cover the predetermined memory area (SB1), wherein in each case a hash value (H1, H2) is calculated on the basis of the data of one of the memory sections (SA1, SA2) and one of the predetermined hash functions.

5.  Method according to claim 3 or 4,
    **characterised in that**
    the respective comparison hash value (H1', H2') is calculated by the second device (3) on the basis of a copy (K) of the data stored in the respective memory section (SA1, SA2) and the respective predetermined hash function.

6.  Method according to claim 1 or one of claims 2 to 5,
    **characterised in that**
    the at least one hash value (H1, H2) is calculated on the basis of the data (D) stored in the predetermined memory area (SB1), the at least one predetermined hash function, the at least one parameter (P) and an identification number of the first device (2).

7.  Method according to claim 1 or one of claims 2 to 6,
    **characterised in that**
    the method step a) comprises:

    a1) provision by the second device (3) of the at least one parameter (P) which is suitable for influencing a hash value (H1, H2) of at least one predetermined hash function; and
    a2) transfer of the provided parameter (P) from the second device (3) to the first device (2).

8.  Method according to claim 1 or one of claims 2 to 7,
    **characterised in that**
    the first device (2) derives the at least one parameter (P) from the calculated hash value (H1) or from the calculated hash values (H1, H2) of a preceding integrity check.

9.  Method according to claim 1 or one of claims 2 to 8,
    **characterised in that**
    a new parameter (P) is provided in each case with regard to each check of the data (D) stored in the predetermined memory area (SB1).

10. Computer program product,
    which initiates the execution of a method according to one of claims 1 to 9 on a program-controlled device.

11. System (6) for checking the integrity of data (D) stored in a predetermined memory area (SB1) of a memory (1) of a first device (2), wherein the first device (2) is coupled to at least one second device (3) by means of a network (4), having:

- a means (7) for providing at least one parameter (P), which is suitable for influencing a hash value (H1, H2) of at least one predetermined hash function;
- the first device (2), which calculates at least one hash value (H1, H2) on the basis of the data (D) stored in the predetermined memory area (SB1), the at least one predetermined hash function and the at least one parameter (P); and
- the second device (3), which checks the integrity of the data (D) stored in the predetermined memory area (SB1) of the first device (2) on the basis of the calculated hash value (H1) or the calculated hash values (H1, H2),

wherein the at least one parameter (P) comprises a number of memory location pointers (S1-S4), as a result of which at least two memory sections (SA1, SA2) of the predetermined memory area (SB1) are defined and the defined memory sections (SA1, SA2) cover at least the predetermined memory area (SB1), wherein in each case a hash value (H1, H2) is calculated on the basis of the data of one of the memory sections (SA1, SA2) and one of the predetermined hash functions.

12. Method for checking the integrity of data (D) stored in a predetermined memory area (SB1) of a memory (1) of a first device (2), wherein the first device (2) is coupled to at least one second device (3) by means of a network (4), comprising the steps:

    a) provision of at least one parameter (P) which is suitable for influencing a hash value (H1, H2) of at least one predetermined hash function;
    b) calculation of at least one hash value (H1, H2) on the basis of the data (D) stored in the predetermined memory area (SB1), the at least one predetermined hash function and the at least one parameter (P); and
    c) checking of the integrity of the data (D) stored in the predetermined memory area (SB1) of the first device (2) on the basis of the calculated hash value (H1) or the calculated hash values (H1, H2) by the second device (3),

wherein the at least one parameter (P) is designed as at least one random number (R), by means of which the respective hash function is initialised, wherein the respective hash value (H1) is calculated on the basis of the data (D) stored in the predetermined memory area (SB1) and of the respective initialised hash function.

**13.** Method according to claim 12,
**characterised in that**
the method step c) comprises:

> c1) transfer of the at least one calculated hash value (H1, H2) from the first device (2) to the second device (3) by means of the network (4);
> c2) calculation of at least one comparison hash value (H1', H2') on the basis of a copy (K) of the data (D) stored in the predetermined memory area (SB1), which is stored in the second device (3), the at least one predetermined hash function and the at least one predetermined parameter (P); and
> c3) comparison by the second device (3) of the transferred hash value (H1, H2) with the calculated comparison hash value (H1', H2') in order to provide a checking result.

**14.** Method according to claim 12,
**characterised in that**
the respective comparison hash value (H1') is calculated by the second device (3) on the basis of a copy (K) of the data (D) stored in the predetermined memory area (SB1) and of the respective predetermined initialised hash function.

**15.** Method according to claim 12, 13 or 14,
**characterised in that**
the at least one hash value (H1, H2) is calculated on the basis of the data (D) stored in the predetermined memory area (SB1), the at least one predetermined hash function, the at least one parameter (P) and an identification number of the first device (2).

**16.** Method according to claim 12 or one of claims 13 to 15,
**characterised in that**
the method step a) comprises:

> a1) provision by the second device (3) of the at least one parameter (P) which is suitable for influencing a hash value (H1, H2) of at least one predetermined hash function; and
> a2) transfer of the provided parameter (P) from the second device (3) to the first device (2).

**17.** Method according to claim 12 or one of claims 13 to 16,
**characterised in that**
the first device (2) derives the at least one parameter (P) from the calculated hash value (H1) or from the calculated hash values (H1, H2) of a preceding integrity check.

**18.** Method according to claim 12 or one of claims 13 to 17,
**characterised in that**

a new parameter (P) is provided in each case with regard to each check of the data (D) stored in the predetermined memory area (SB1).

**19.** Computer program product,
which initiates the execution of a method according to one of claims 12 to 18 on a program-controlled device.

**20.** System (6) for checking the integrity of data (D) stored in a predetermined memory area (SB1) of a memory (1) of a first device (2), wherein the first device (2) is coupled to at least one second device (3) by means of a network (4), having:

> - a means (7) for providing at least one parameter (P), which is suitable for influencing a hash value (H1, H2) of at least one predetermined hash function;
> - the first device (2), which calculates at least one hash value (H1, H2) on the basis of the data (D) stored in the predetermined memory area (SB1), the at least one predetermined hash function and the at least one parameter (P); and
> - the second device (3), which checks the integrity of the data (D) stored in the predetermined memory area (SB1) of the first device (2) on the basis of the calculated hash value (H1) or the calculated hash values (H1, H2),

wherein the at least one parameter (P) is designed as at least one random number (R), by means of which the respective hash function is initialised, wherein the respective hash value (H1) is calculated on the basis of the data (D) stored in the predetermined memory area (SB1) and of the respective initialised hash function.

**Revendications**

**1.** Procédé permettant de vérifier l'intégrité de données (D) stockées dans une zone de mémoire prédéfinie (SB1) d'une mémoire (1) d'un premier dispositif (2), le premier dispositif (2) étant couplé à au moins un deuxième dispositif (3) au moyen d'un réseau (4), comportant les étapes suivantes :

> a) fourniture d'au moins un paramètre (P) adapté pour influencer une valeur de hachage (H1, H2) d'au moins une fonction de hachage prédéfinie ;
> b) calcul d'au moins une valeur de hachage (H1, H2) en fonction des données (D) stockées dans la zone de mémoire prédéfinie (SB1), de l'au moins une fonction de hachage prédéfinie et de l'au moins un paramètre (P) ; et
> c) vérification de l'intégrité des données (D) stockées dans la zone de mémoire prédéfinie (SB1) du premier dispositif (2) en fonction de la valeur de hachage calculée (H1) ou des valeurs de hachage calculées (H1, H2) par le deuxième dispositif (3),

l'au moins un paramètre (P) incluant un nombre d'indicateurs d'emplacement de mémoire (S1-S4), cela permettant de définir au moins deux sections de mémoire (SA1, SA2) de la zone de mémoire prédéfinie (SB1) et les sections de mémoire définies (SA1, SA2) couvrant de ce fait au moins la zone de mémoire prédéfinie (SB1), respectivement une valeur de hachage (H1, H2) étant calculée en fonction des données de l'une des sections de mémoire (SA1, SA2) et de l'une des fonctions de hachage prédéfinies.

2. Procédé selon la revendication 1, **caractérisé en ce que** l'étape c) inclut :

c1) la transmission de l'au moins une valeur de hachage calculée (H1, H2) du premier dispositif (2) au deuxième dispositif (3) au moyen du réseau (4) ;
c2) le calcul d'au moins une valeur de hachage de comparaison (H1', H2') en fonction d'une copie (K) des données (D) stockées dans la zone de mémoire prédéfinie (SB1), laquelle copie est stockée dans le deuxième dispositif (3), de l'au moins une fonction de hachage prédéfinie et de l'au moins un paramètre prédéfini (P) ; et
c3) la comparaison de la valeur de hachage transmise (H1, H2) avec la valeur de hachage de comparaison calculée (H1', H2') par le deuxième dispositif (3) pour la fourniture d'un résultat de vérification.

3. Procédé selon la revendication 1 et 2, **caractérisé en ce que** l'au moins un paramètre (P) inclut un nombre d'indicateurs d'emplacement de mémoire (S1-S4), respectivement deux indicateurs d'emplacement de mémoire (S1, S4 ; S3, S2) définissant une section de mémoire (SA1, SA2) de la zone de mémoire prédéfinie (SB1) et les sections de mémoire définies (SA1, SA2) couvrant au moins la zone de mémoire prédéfinie (SB1), respectivement une valeur de hachage (H1, H2) étant calculée en fonction des données de l'une des sections de mémoire (SA1, SA2) et de l'une des fonctions de hachage prédéfinies.

4. Procédé selon la revendication 1 ou 2, **caractérisé en ce que** l'au moins un paramètre (P) inclut deux indicateurs d'emplacement de mémoire (S1, S2), un premier indicateur d'emplacement de mémoire (S1) et une fin (S5) de la zone de mémoire prédéfinie (SB1) définissant une première section de mémoire (SA1), un deuxième indicateur d'emplacement de mémoire (S2) et un début (S0) de la zone de mémoire prédéfinie (SB1) définissant une deuxième section de mémoire (SA2) et les sections de mémoire définies (SA1, SA2) couvrant au moins la zone de mémoire prédéfinie (SB1), respectivement une valeur de hachage (H1, H2) étant calculée en fonction des données de l'une des sections de mémoire (SA1, SA2) et de l'une des fonctions de hachage prédéfinies.

5. Procédé selon la revendication 3 ou 4, **caractérisé en ce que** la valeur de hachage de comparaison respective (H1', H2') est calculée par le deuxième dispositif (3) en fonction d'une copie (K) des données stockées dans la section de mémoire respective (SA1, SA2) et de la fonction de hachage prédéfinie respective.

6. Procédé selon la revendication 1 ou selon l'une des revendications 2 à 5, **caractérisé en ce que** l'au moins une valeur de hachage (H1, H2) est calculée en fonction des données (D) stockées dans la zone de mémoire prédéfinie (SB1), de l'au moins une fonction de hachage prédéfinie, de l'au moins un paramètre (P) et d'un numéro d'identification du premier dispositif (2).

7. Procédé selon la revendication 1 ou selon l'une des revendications 2 à 6, **caractérisé en ce que** l'étape a) inclut :

a1) la fourniture, par le deuxième dispositif (3), de l'au moins un paramètre (P) qui est adapté pour influencer une valeur de hachage (H1, H2) d'au moins une fonction de hachage prédéfinie ; et
a2) la transmission du paramètre fourni (P) du deuxième dispositif (3) au premier dispositif (2).

8. Procédé selon la revendication 1 ou selon l'une des revendications 2 à 7, **caractérisé en ce que** le premier dispositif (2) déduit l'au moins un paramètre (P) de la valeur de hachage calculée (H1) ou des valeurs de hachage calculées (H1, H2) d'une vérification préalable de l'intégrité.

9. Procédé selon la revendication 1 ou selon l'une des revendications 2 à 8, **caractérisé en ce que** respectivement un nouveau paramètre (P) est fourni à chaque vérification des données (D) stockées dans la zone de mémoire prédéfinie (SB1).

10. Produit de programme informatique qui fait exécuter un procédé selon l'une des revendications 1 à 9 sur un dispositif commandé par programme.

11. Système (6) de vérification de l'intégrité de données (D) stockées dans une zone de mémoire prédéfinie (SB1) d'une mémoire (1) d'un premier dispositif (2), le premier dispositif (2) étant couplé à au moins un deuxième dispositif (3) au moyen d'un réseau (4), comportant :

- un moyen (7) pour fournir au moins un paramètre (P) qui est adapté pour influencer une valeur de hachage (H1, H2) d'au moins une fonction de hachage prédéfinie ;
- le premier dispositif (2), qui calcule au moins une valeur de hachage (H1, H2) en fonction des données (D) stockées dans la zone de mémoire prédéfinie (SB1), de l'au moins une fonction de hachage prédéfinie et de l'au moins un paramètre (P) ; et
- le deuxième dispositif (3), qui vérifie l'intégrité des données (D) stockées dans la zone de mémoire prédéfinie (SB1) du premier dispositif (2) en fonction de la valeur de hachage calculée (H1) ou des valeurs de hachage calculées (H1, H2),

l'au moins un paramètre (P) incluant un nombre d'indicateurs d'emplacement de mémoire (S1-S4), cela permettant de définir au moins deux sections de mémoire (SA1, SA2) de la zone de mémoire prédéfinie (SB1) et les sections de mémoire définies (SA1, SA2) couvrant de ce fait au moins la zone de mémoire prédéfinie (SB1), respectivement une valeur de hachage (H1, H2) étant calculée en fonction des données de l'une des sections de mémoire (SA1, SA2) et de l'une des fonctions de hachage prédéfinies.

12. Procédé de vérification de l'intégrité de données (D) stockées dans une zone de mémoire prédéfinie (SB1) d'une mémoire (1) d'un premier dispositif (2), le premier dispositif (2) étant couplé au moins à un deuxième dispositif (3) au moyen d'un réseau (4), comportant les étapes suivantes :

a) fourniture d'au moins un paramètre (P) qui est adapté pour influencer une valeur de hachage (H1, H2) d'au moins une fonction de hachage prédéfinie ;
b) calcul d'au moins une valeur de hachage (H1, H2) en fonction des données (D) stockées dans la zone de mémoire prédéfinie (SB1), de l'au moins une fonction de hachage prédéfinie et de l'au moins un paramètre (P) ; et
c) vérification, par le deuxième dispositif (3), de l'intégrité des données (D) stockées dans la zone de mémoire prédéfinie (SB1) du premier dispositif (2) en fonction de la valeur de hachage calculée (H1) ou de la valeur de hachage calculée (H1, H2),

l'au moins un paramètre (P) se présentant sous la forme d'au moins un nombre aléatoire (R) permettant d'initialiser la fonction de hachage respective, la valeur de hachage respective (H1) étant calculée en fonction des données (D) stockées dans la zone de mémoire prédéfinie (SB1) et de la fonction de hachage initialisée respective.

13. Procédé selon la revendication 12, **caractérisé en ce que** l'étape c) inclut :

c1) la transmission de l'au moins une valeur de hachage calculée (H1, H2) du premier dispositif (2) au deuxième dispositif (3) au moyen du réseau (4) ;
c2) le calcul d'au moins une valeur de hachage de comparaison (H1', H2') en fonction d'une copie (K) des données (D) stockées dans la zone de mémoire prédéfinie (SB1), laquelle copie est stockée dans le deuxième dispositif (3), de l'au moins une fonction de hachage prédéfinie et de l'au moins un paramètre prédéfini (P) ; et
c3) la comparaison de la valeur de hachage transmise (H1, H2) avec la valeur de hachage de comparaison calculée (H1', H2') par le deuxième dispositif (3) pour la fourniture d'un résultat de vérification.

14. Procédé selon la revendication 12, **caractérisé en ce que** la valeur de hachage de comparaison respective (H1') est calculée par le deuxième dispositif (3) en fonction d'une copie (K) des données (D) stockées dans la zone de mémoire prédéfinie (SB1) et de la fonction de hachage initialisée prédéfinie respective.

15. Procédé selon la revendication 12, 13 ou 14, **caractérisé en ce que** l'au moins une valeur de hachage (H1, H2) est calculée en fonction des données (D) stockées dans la zone de mémoire prédéfinie (SB1), de l'au moins une fonction de hachage prédéfinie, de l'au moins un paramètre (P) et d'un numéro d'identification du premier dispositif (2).

16. Procédé selon la revendication 12 ou selon l'une des revendications 13 à 15, **caractérisé en ce que** l'étape a) inclut :

a1) la fourniture, par le deuxième dispositif (3), de l'au moins un paramètre (P) qui est adapté pour influencer une valeur de hachage (H1, H2) d'au moins une fonction de hachage prédéfinie ; et
a2) la transmission du paramètre fourni (P) du deuxième dispositif (3) au premier dispositif (2).

17. Procédé selon la revendication 12 ou selon l'une des revendications 13 à 16, **caractérisé en ce que** le premier dispositif (2) déduit l'au moins un paramètre (P) de la valeur de hachage calculée (H1) ou des valeurs de hachage calculées (H1, H2) d'une vérification préalable de l'intégrité.

18. Procédé selon la revendication 12 ou selon l'une des revendications 13 à 17, **caractérisé en ce que** respectivement un nouveau paramètre (P) est fourni à chaque vérification des données (D) stockées dans la zone de mémoire prédéfinie (SB1).

19. Produit de programme informatique qui fait exécuter un procédé selon l'une des revendications 12 à 18 sur un dispositif commandé par programme.

20. Système (6) de vérification de l'intégrité de données (D) stockées dans une zone de mémoire prédéfinie (SB1) d'une mémoire (1) d'un premier dispositif (2), le premier dispositif (2) étant couplé à au moins un deuxième dispositif (3) au moyen d'un réseau (4), comportant :

 - un moyen (7) pour fournir au moins un paramètre (P) qui est adapté pour influencer une valeur de hachage (H1, H2) d'au moins une fonction de hachage prédéfinie ;
 - le premier dispositif (2), qui calcule au moins une valeur de hachage (H1, H2) en fonction des données (D) stockées dans la zone de mémoire prédéfinie (SB1), de l'au moins une fonction de hachage prédéfinie et de l'au moins un paramètre (P) ; et
 - le deuxième dispositif (3), qui vérifie l'intégrité des données (D) stockées dans la zone de mémoire prédéfinie (SB1) du premier dispositif (2) en fonction de la valeur de hachage calculée (H1) ou des valeurs de hachage calculées (H1, H2),

l'au moins un paramètre (P) se présentant sous la forme d'au moins un nombre aléatoire (R) permettant d'initialiser la fonction de hachage respective, la valeur de hachage respective (H1) étant calculée en fonction des données (D) stockées dans la zone de mémoire prédéfinie (SB1) et de la fonction de hachage initialisée respective.

FIG 1

FIG 2

FIG 3

FIG 4

```
┌─────────┐
│    a    │
└─────────┘
     │
     ▼
┌─────────┐
│    b    │
└─────────┘
     │
     ▼
┌─────────┐
│    c    │
└─────────┘
```

```
┌─────────┐
│   a1    │
└─────────┘
     │
     ▼
┌─────────┐
│   a2    │
└─────────┘
     │
     ▼
┌─────────┐
│    b    │
└─────────┘
     │
     ▼
┌─────────┐
│    c    │
└─────────┘
```

```
┌─────────┐
│    a    │
└─────────┘
     │
     ▼
┌─────────┐
│    b    │
└─────────┘
     │
     ▼
┌─────────┐
│   c1    │
└─────────┘
     │
     ▼
┌─────────┐
│   c2    │
└─────────┘
     │
     ▼
┌─────────┐
│   c3    │
└─────────┘
```

# FIG 5

1

SB1                                                                SB2

SA2                    SA1                    SA2

S0
       S1
                      H1              S4

       S2          S3
                              H2

# FIG 6

1

SB1                                                                SB2

SA2                              SA1

S0
                                                              S5
       S1
                         H1

       S2
   H2

## FIG 7

SB1   SB2

SA2   SA1

S0   S5

S1

H1

H2

## FIG 8

SB1   SB2

S0   S5

H1

## FIG 9

SB1   SB2

S0   S5

H1

**EP 2 171 632 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6954861 B2
- EP 1030237 A1
- EP 1056010 A1